# EUROPEAN PATENT APPLICATION

(11) **EP 2 108 978 A2**
(43) Date of publication of application: **14.10.2009**
(21) Application number: 09157806.2
(22) Date of filing: 10.04.2009
(51) Int. Cl.: G01T 7/00

(54) **Mobile radiometric terminal for a geographically distributed network operating in real time**

(30) Priority: 10.04.2008 IT RM20080190
(71) Applicant: Enea-Ente Per Le Nuove Tecnologie, L'Energia e L'Ambiente, 00196 Rome (IT); RTS Instruments S.r.l., 00132 Rome (IT); Octo Telematics S.p.A., 42100 Reggio Emilia (RE) (IT)
(72) Inventor: Scafè, Raffaele, 00061, Anguillara Sabazia (RM) (IT); Salmi, Maurizio, 00198, Rome (IT); Cantoni, Mauro, 00196, Rome (IT); Pisacane, Fabrizio, 00189, Rome (IT); Zuco, Giuseppe, 00135, Rome (IT); Della Sala, Dario, 00053, Civitavecchia (RM) (IT)
(74) Representative: Sarpi, Maurizio

(57) **Abstract**

A mobile radiometric device comprises four functional blocks: a block (1) dedicated to detection of ionizing and non-ionizing radiation; a block (2) reserved to location (satellite location, land location, or else hybrid location) of the terminal itself; a block (3), which is able to process the radiometric and position data and to communicate in bidirectional mode with a data-processing centre; and a block (4), which ensures adequate electrical supply of the circuits.

## Description

The present invention relates to the sector of devices for monitoring and radiometric detection of ionizing and non-ionizing radiation, and more in particular regards a mobile radiometric terminal that enables, in association with a plurality of mobile devices of a similar type, creation of a network for measuring radiometric quantities operating within a chosen geographical area that is explored dynamically by a set of georeferenced terminals connected in real time with a processing centre, the modalities of exploration being established by the nature of the carriers (air, sea, or land transport means) that house the terminals themselves.

Devices for monitoring ionizing and non-ionizing radiation have been used for some time in nuclear-power plants, in outdoor measuring stations distributed over the territory, and in laboratories that use radioactive material, according to the standards of safety and safeguarding of the environment. However, said devices enable measurement and control of the level of one or more types of radiation only in the area in which they are located.

Currently, with the greater attention demanded by issues of an environmental nature, there is markedly felt the need to extend the measurements of radiation fields to territories that are more extensive in order to build radiometric maps at a provincial, regional, and national level, as well as to specific areas, such as volcanic ones, without resorting to the location of an excessively high number of fixed detection stations.

It would moreover be necessary for a territory-monitoring system to enable an operative centre to evaluate in real time the evolution of a local critical situation that could extend to the surrounding territories, where the fixed detector stations may possibly be absent, by supplying data coming from detectors installed on vehicles already moving autonomously on the territory itself. Consider, for example, the rapid displacement of a radioactive cloud and the need for the civil-protection service to provide a real-time alert for the population that might come into contact with the cloud itself.

Recently disclosed in the U.S. patent application No. USA 2007205891A1 is a monitoring system based upon a network of radiation detectors. Said system, albeit envisaging for each detector a plurality of associated sensors of different types for measurement of the different types of radiation, does not include any device for detection of the position of the detector itself and hence regards a network of sensors fixed with respect to the theatre of operations, which do not have the possibility of being identified and located during and following upon a possible displacement thereof.

The aim of the present invention is to overcome the limits of the devices and of the systems so far known by proposing a monitoring system based upon a network of radiometric terminals that are able to move with respect to the theatre of operations and that will be locatable in space.

The above has been obtained according to the invention by providing a mobile radiometric terminal, characterized by: (a) a capacity for making measurements of radiometric interest; (b) a degree of mobility, even minimal, in the theatre of interest in the course of the operating life of the terminal itself; (c) a capacity of determining the space-time co-ordinates associated to the terminal itself referred to a reference system fixed with respect to the terrestrial globe provided with time reference; and (d) a capacity of communicating the data acquired to a processing centre dedicated for the purpose, storing them in the case where, on account of lack of field or for different reasons of expedience, it is not possible or it is not intended to send them to said centre.

Integrating said characteristics, the terminals forming the subject of the present invention are able to supply radiometric data describing the radiation field interacting with the radiometric detector throughout the path followed by the terminal itself during the acquisition time.

Obviously, the terminal will be able to supply radiometric data not only when it is moving, but also when it is stationary.

According to the invention the mobility of the terminal can derive from: (A) installation on board any generic carrier, driven by a human operator or else automatically, whether motor-driven or not; or (B) the movement of the person or of the animal that wears it.

A peculiar characteristic of the invention is that the detectors are georeferenced via a location system.

In general, the radiation field is constituted by an environmental background component, which is a function of the path covered and of the spatial distribution of the radiation sources present in the surrounding space, and by a vehicle component that depends upon the intrinsic contribution of the carrier, upon what derives from possible radio-emitting sources housed on the carrier itself during the acquisition time and possibly upon what can be attributed to contamination of the carrier deriving from the interaction with a scenario that is in turn contaminated. The first component can also be estimated as fluctuating, whilst the second component can be considered constant since, in the course of the acquisition time, the relative position of the terminal with respect to the transported source does not vary and, realistically, the contribution from possible contamination collected can be assumed as linearly increasing over time but with a very small angular coefficient (at least until said contamination is removed - for example, following upon atmospheric events or on account of human intervention).

Considering the radiometric characteristic of the mobile terminals that are described and the mobility of the carriers by which the said terminals are transported within areas of interest, it is possible to identify, merely by way of non-exhaustive example, some advantageous fields of application concerning the safety of the transport of freight and of persons and environmental monitoring, based precisely upon the knowledge of the radiometric data:
1. surveillance of freight transported by land, air, or else sea carriers;
2. surveillance of luggage when accompanying persons transported by the carriers referred to above;
3. monitoring of geographical areas from the standpoint of the environmental background; and
4. monitoring of particulate matter in air that is collected by the moving carriers.

Further characteristics and advantages of the invention will emerge clearly from the ensuing detailed description with reference to the attached plates of drawings, which illustrate, purely by way of nonlimiting example, a preferred embodiment thereof. In the plates of drawings:
Figure 1 is a schematic illustration of a mobile radiometric terminal according to the invention; and
Figure 2 is again a schematic illustration of its application on an automobile.

With reference to the figures, the mobile radiometric device, designated as a whole by TRM, substantially comprises four functional blocks: a block 1 dedicated to detection of ionizing and non-ionizing radiation; a block 2 reserved to satellite, land, or else hybrid location of the terminal itself; a block 3, which is able to process the radiometric and position data and to communicate in bidirectional mode with a data-processing centre; and a block 4, which provides the adequate electrical supplies of the circuits.

The individual blocks constituting the device TRM may obviously be of different types and characteristics according to the specific radiometric requirements envisaged for the terminal, according to the technologies of location available, and according to the remote-communication modalities available and practicable in the territory of interest. Finally, corresponding to the temporal operating modes envisaged is the choice of the appropriate electrical supply.

There now follows a description of the blocks of the device TRM referred to above.

The block 1 for detection of ionizing, and/or non-ionizing radiation ("radiometric block") is constituted, according to the requirements, by at least one device for monitoring alpha, and/or beta, and/or X, and/or gamma, and/or neutron radiation. In principle, these are devices having dimensions and encumbrance compatible with the characteristics of the carriers that house them on board and transport them in the area of interest. Said devices are able to make measurements within the carrier and in the external environment, and also in particular media (such as, by way of non-exhaustive example, air, water, suspended dust, etc.) using mature technologies and interfacing systems of a standard type (by way of non-exhaustive example, voltage, current, or pulse interfacing systems, RS232, RS485, etc.).

The radiometric block 1 of the device TRM can be constituted, in particular, by one or more devices of miniaturized or sub-miniaturized dimensions such as the ones that form the subject of the patent application No. IT RM2005A000204 dated April 29, 2005, entitled *"Rivelatore a scintillazione sub-miniaturizzato"* (*"Sub-miniaturized scintillation detector"*), and/or by at least one omnidirectional detection device, such as the one described in the patent application No. IT RM2006A000585 dated October 27, 2006, entitled *"Rivelatore a scintillazione omnidirezionale e metodo per la localizzazione spaziale di sorgenti radioattive"* ("*Omnidirectional scintillation device and method for spatial location of radioactive sources"*).

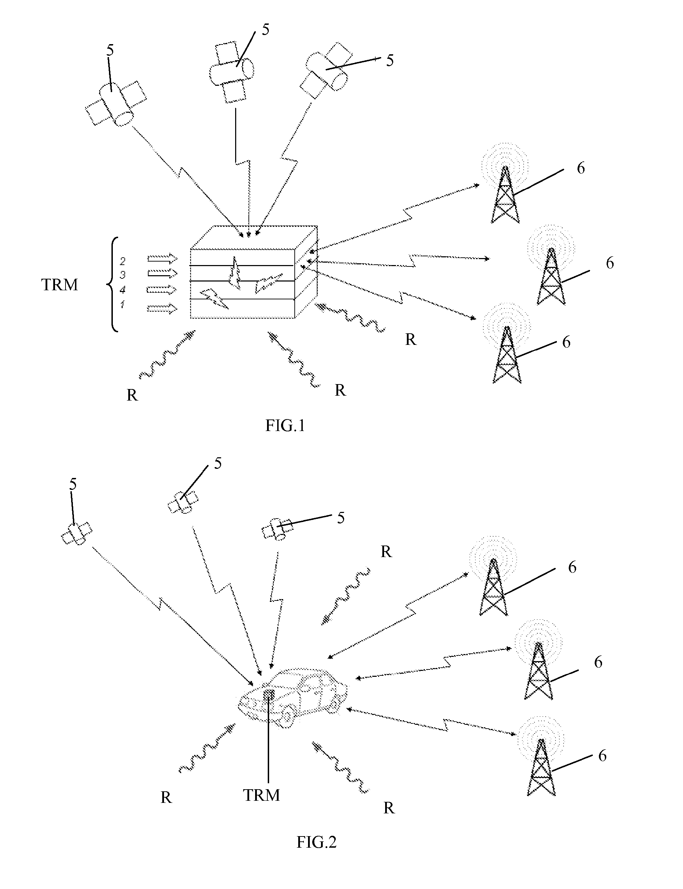

The location block 2 of the device TRM is constituted - by way of non-exhaustive example of satellite methodology (a system of satellites is designated as a whole by the reference number 5 in Figure 1) - by GNSS (Global Navigation Satellite Systems) receivers that make available the signals that are indispensable for associating to the radiometric measurements the necessary absolute references of a temporal and spatial type.

The block 3 for processing and communication with the remote processing centre operates in bidirectional mode with a radio-communication system, once again by way of non-exhaustive example of the possibilities, one based upon GSM, GPRS, UMTS technology. The results of the measurements are appropriately returned in digital form, associated biuniquely to the sensors installed and georeferenced before being transmitted in selective or cumulative modalities to at least one remote receiving station, not represented in the figures, via the communication network 6. Also provided are means for non-volatile storage of the aforesaid data to enable postponement of transmission to the receiving station, either by choice or out of necessity.

Finally, the block 4 for electrical supply of the circuits must respond not only to the normal criteria of sizing but also to the particular uses that are required of the terminals TRM. The aim is to specify and comprise, by way of non-exhaustive example of the possible cases:
(a) devices supplied by sources provided on the carriers that house them;
(b) devices supplied by sources recharged via the ones provided on the carriers that house them;
(c) devices supplied by non-rechargeable sources, which enable operation for a limited time (disposable devices); and
(d) devices supplied by rechargeable sources through external sources and available in the operating environment.

Illustrated by way of example in Figure 2 is the use of a device TRM on an automobile. In this case, the device TRM, via its block 2, associates to the radiometric measurements the absolute references of a temporal and spatial type in such a way that the results of the measurements are associated biuniquely to the sensors installed and georeferenced before being passed on to the block 3, which processes them in digital form and transmits them to at least one remote receiving station (not illustrated in the figures) via a communication network 6.

Amongst the advantages of the device according to the present invention the following features may be listed:
- the terminals TRM do not require intervention *in situ* by operators in so far as they are autonomous and controlled in a remote way by a purposely provided data-processing centre;
- a practically unlimited number of terminals TRM can be added to the network, which can thus increase or decrease in a dynamic way over time;
- the type of radiation that can be measured by the terminals TRM is not fixed beforehand, and this enables connection of terminals for ionizing and non-ionizing radiation of any type;
- unlike portal radiometric systems - which operate during forced crossing of a barrier, for example by a transport vehicle at a national frontier or border - the terminals TRM are able to carry out radiometric detection throughout the entire duration of transport, with a considerable reduction in the minimum detectable amounts;
- the means provided with terminals TRM are not forced to follow obligate paths or else to make special stops, a fact that can in practice lead to a reduction in the frequency of the radiometric checks in order to facilitate mobility of freight and/or persons; the detections are in fact made during the journey;
- possible situations of alert can be effectively managed since not only the radiometric data but also the spatial and temporal tracking data of the terminal TRM are available in real time;
- it is possible to provide for and manage a real-time mapping of the territory also for purely statistical reasons (and not only in the event of emergency), accumulating the measurements made by the plurality of the devices so as to draw up a historic file.

Described so far is a preferred embodiment of the invention. It is on the other hand evident that numerous variations and modifications can be made to the device described herein by a person skilled in the branch in order to adapt it to the different operating requirements, without this implying any departure from the sphere of protection of the present industrial patent right, as defined in the ensuing claims.

## Claims

1. A radiometric device, **characterized in that** it is designed to be transported by a mobile carrier and **in that** it comprises:
a) means designed to perform measurements of radiometric interest;
b) means for determining the space-time co-ordinates associated to the device itself referred to a reference system fixed with respect to the terrestrial globe provided with time reference; and
c) means for communicating the radiometric data acquired and the corresponding space and time references to a processing centre dedicated for the purpose;
thereby obtaining that said device has a degree of mobility, even minimal, in the theatre of interest in the course of the operating life of the device itself and that it will be able to supply said processing centre with radiometric data describing the radiation field interacting with the radiometric device itself in all the geographical positions occupied by it during the acquisition time.

2. The radiometric device as per the preceding claim, **characterized in that** it substantially comprises four functional blocks:
- a first, radiometric, block (1) dedicated to detection of ionizing and non-ionizing radiation;
- a second block (2) reserved to location - satellite location, land location, or else hybrid location - of the terminal itself;
- a third block (3), which is able to process the radiometric and space-time data and to communicate in bidirectional mode with a data-processing centre; and
- a fourth block (4), which provides the adequate electrical supplies of the circuits.

3. The radiometric device as per the preceding claim, **characterized in that** the first radiometric block (1) is constituted, according to the requirements, by at least one device for monitoring alpha, and/or beta, and/or X, and/or gamma, and/or neutron radiation.

4. The radiometric device as per the preceding claim, **characterized in that** the dimensions and encumbrance of said monitoring devices are compatible with the characteristics of the carriers that house them on board and transport them in the area of interest; said devices being designed for making measurements within the carrier and in the external environment, and also in particular matrices, such as water, suspended dust, and the like.

5. The radiometric device as per Claim 2, **characterized in that** the second location block (2) of the device TRM is constituted by GNSS (Global Navigation Satellite Systems) receivers or other location systems of a known type that make available the signals indispensable for associating to the radiometric measurements the necessary absolute references of a temporal and spatial type.

6. The radiometric device as per Claim 2, **characterized in that** the third block (3) for processing, storage, and communication with the remote processing centre operates in bidirectional mode with a radio-communication system based upon known technologies, such as GSM, GPRS, UMTS; the results of the measurements being appropriately returned in digital form, associated biuniquely to the sensors installed and associated to the space-time information before being transmitted in selective or cumulative modalities to at least one remote receiving station.

7. The radiometric device as per Claim 1, **characterized in that** it further comprises means of a known type for storing the radiometric data acquired and the corresponding space and time references so as to be able to transmit them to the processing centre in deferred mode.

8. The radiometric device as per any one of the preceding claims, **characterized in that,** in association with a plurality of mobile devices of a similar type, it is designed to enable creation of a network for measuring geographically distributed radiometric quantities, which operates in real time within a chosen geographical area that is explored dynamically by at least one of said georeferenced devices.

9. A network for measuring geographically distributed radiometric quantities comprising:
- a plurality of radiometric devices according to Claim 1 or Claim 7, which explore dynamically a chosen geographical area; and
- a remote processing centre, configured for communicating with said mobile radiometric devices and for receiving, also in real time, the radiometric data describing the radiation field interacting with each of said radiometric devices in all the geographical positions occupied by said devices during the acquisition time.
